# EUROPÄISCHE PATENTSCHRIFT

(11) **EP 1 570 198 B1**
(45) Veröffentlichungstag und Bekanntmachung des Hinweises auf die Patenterteilung: **17.05.2006**
(21) Anmeldenummer: 03789142.1
(22) Anmeldetag: 05.12.2003
(51) Int. Cl.: F16K 15/06

(54) **RÜCKFLUSSVERHINDERER**
BACKFLOW PREVENTER
CLAPET ANTIRETOUR

(30) Priorität: 10.12.2002 DE 10257517
(43) Veröffentlichungstag der Anmeldung: 07.09.2005
(73) Patentinhaber: Neoperl GmbH, 79379 Müllheim (DE)
(72) Erfinder: FANGMEIER, Martin, 79424 Auggen (DE)
(74) Vertreter: Patent- und Rechtsanwaltssozietät Maucher, Börjes & Kollegen
(86) Internationale Anmeldenummer: PCT/EP2003/013768
(87) Internationale Veröffentlichungsnummer: WO 2004/053368

(56) Entgegenhaltungen:
- WO-A-93/01435
- DE-U- 20 105 498
- US-A- 3 976 096

## Beschreibung

Die Erfindung betrifft einen Rückflußverhinderer mit einem, in eine Fluidleitung einsetzbaren Einbaugehäuse, sowie mit zumindest einem Dichtring, der in einer am Gehäuse-Außenumfang des Einbaugehäuses vorgesehenen Ringnut gehalten ist und der zwischen Einbaugehäuse und Fluidleitung abdichtet.

Derartige Rückflußverhinderer werden in Gas-, Wasser- oder dergleichen Versorgungsleitungen eingesetzt, um eine Rückströmung des Fluids entgegen der beabsichtigten Durchströmrichtung zu verhindern. So baut man Rückschlagventile zunehmend auch in Wasserleitungen ein, um im Falle eines Unterdrucks dem Eindringen von Schmutzwasser in die Frischwasserversorgungsleitung entgegenzuwirken.

Der Einsatz derartiger Rückschlagventile im Bereich von Thermostatventilen bringt häufig jedoch das Problem mit sich, dass das Wasser, das beim Absperren der Kaltwasser- oder Warmwasserseite zwischen dem geschlossenen Rückschlagventil einerseits und dem ebenfalls geschlossenen Ventilsitz andererseits eingeschlossen ist, durch äußere Einflüsse stark aufgeheizt wird und damit an Volumen zunimmt, bis Systemdrücke entstehen, die zu Beschädigungen am schwächsten Teil der Versorgungsleitung und somit häufig am Rückschlagventil führen. Dies kann letztlich einen Verschluß der Versorgungsleitung oder einen ebenfalls unerwünschten Kreuzfluß zur Folge haben.

Es ist bereits ein Rückschlagventil bekannt, das an seinem Schließkörper stirnseitig einen haubenförmigen Aufsatz mit einer seitlichen Austrittsöffnung trägt (vgl. WO 93/01435). Der zur Austrittsöffnung des als Überdruckventil dienenden Aufsatzes führende By-Pass-Kanal ist mittels eines Ventilverschlussstückes verschlossen, das bei einer Innendruckerhöhung angehoben wird und dem durch den By-Pass-Kanal rückströmenden Fluid die Austrittsöffnung freigibt. Nachteilig ist jedoch, dass der vorbekannte Rückflußverhinderer über die an seinem Gehäuseumfang sowie am Ventilsitz seines Rückschlagventiles erforderlichen Dichtungen hinaus eine weitere Dichtzone im Bereich des Überdruckventiles aufweist, die eventuell zu Funktionsstörungen führen kann. Da dieses Überdruckventil über den Ventilkörper des Rückschlagventiles vorsteht, ist der aus WO 93/01435 vorbekannte Rückflußverhinderer im übrigen nicht ohne weiteres mit einem Durchflussmengenregler oder anderen zuströmseitig unmittelbar vorgeschalteten sanitären Einbauteilen verwendbar.

Es besteht daher insbesondere die Aufgabe, einen konstruktiv einfachen und wartungsarmen Rückflußverhinderer der eingangs erwähnten Art zu schaffen, der sich durch eine gleichbleibende übliche Einbaulänge auszeichnet und der dennoch einer übermäßigen Innendruckerhöhung wirkungsvoll entgegenwirkt.

Die erfindungsgemäße Lösung dieser Aufgabe besteht bei dem Rückflußverhinderer der eingangs erwähnten Art insbesondere darin, dass der Dichtring zum Druckausgleich bei geschlossenem Rückflußverhinderer und einem abströmseitig abgeschlossenen Fluidvolumen von einer Dichtstellung gegen eine Rückstellkraft in eine Leckageposition bewegbar ist.

Bei dem erfindungsgemäßen Rückflußverhinderer dient der zum Abdichten zwischen Einbaugehäuse und Fluidleitung üblicherweise benötigte Dichtring gleichzeitig auch als Überdruckventil, so dass insoweit auf eine zusätzlich, eventuell störungsanfällige Dichtzone verzichtet werden kann. Da dieser Dichtring am Gehäuse-Außenumfang gehalten ist und nicht über den Ventilkörper des Rückschlagventiles vorsteht, ist der erfindungsgemäße Rückflußverhinderer bei üblicher Einbaulänge ohne weiteres auch mit einem Durchflussmengenregler oder einem anderen, zuströmseitig unmittelbar vorgeschalteten Einbauteil kombinierbar. Dabei kann der Dichtring zum Druckausgleich auf einfache Weise von einer Dichtstellung gegen eine Rückstellkraft in eine Leckageposition bewegt werden, in welcher ein eventueller Überdruck auf der Abströmseite des Rückflußverhinderers solange wirkungsvoll abgebaut wird, bis die Rückstellkraft den Dichtring wieder in seine Dichtposition bewegt.

Möglich ist es, dass auf den Dichtring die Rückstellkraft zumindest einer Rückstellfeder einwirkt. Eine bevorzugte und mit geringem Herstellungsaufwand verbundene Ausführungsform gemäß der Erfindung sieht jedoch vor, dass auf den Dichtring die Rückstellkraft zumindest eines gummielastischen Rückstellelementes einwirkt.

Dabei ist es vorteilhaft, wenn das zumindest eine, durch Form- und/oder Materialwahl wirksame Rückstellelement ringförmig ausgestaltet ist.

Dichtring und Rückstellelement können als separate Bauteile ausgebildet sein, die in der am Gehäuse-Außenumfang vorgesehenen Ringnut gehalten sind. Eine bevorzugte Weiterbildung gemäß der Erfindung sieht jedoch vor, dass der Dichtring und das zumindest eine Rückstellelement zu einer Dicht- und Rückstelleinheit einstückig miteinander verbunden sind. Dabei kann der Dichtring mit einem ebenfalls ringförmigen Rückstellelement einstückig verbunden sein oder beispielsweise auch mehrere zuströmseitige Anformungen aufweisen, die als Rückstellelemente dienen.

Besonders vorteilhaft ist es, wenn in der Nut ein vom Dichtring umgriffener Ringführungsabschnitt vorgesehen ist, der sich entgegen der Zuströmrichtung des Rückflußverhinderers verjüngt. Während der Dichtring im abströmseitigen erweiterten Teilbereich des Ringführungsabschnitts gegen den Innenumfang der Flüssigkeitsleitung in seine Dichtstellung gedrückt wird, ist der Dichtring in dem zuströmseitigen verjüngten Teilbereich in seiner demgegenüber entspannten Leckageposition gehalten.

Zweckmäßig ist es, wenn das Rückstellelement sich an der zuströmseitigen Radialwand der Nut abstützt, um den Dichtring in Rückstellrichtung zu bewegen.

Eine bevorzugte Ausführungsform gemäß der Erfindung sieht vor, dass der Dichtring mittels eines auf ihn einwirkenden Rückflusses von der Dichtstellung in die Leckageposition bewegbar ist. Dieser Rückfluß kann von der Abströmseite des Rückflußverhinderers aus zwischen Gehäuse-Außenwand und der Flüssigkeitsleitung bis zum Dichtring strömen, um den Dichtring dort druckbedingt von seiner Dichtstellung in die Leckageposition zu bewegen.

Um einen auf der Abströmseite des Rückflußverhinderers wirkenden Überdruck rasch abbauen zu können, ist es vorteilhaft, wenn zumindest ein Druckausgleichskanal vorgesehen ist, der den in Zuströmrichtung vor der Leckageposition angeordneten Nutbereich mit der Zuströmseite des Rückflußverhinderers verbindet. Dabei sieht eine besonders einfache und bevorzugte Ausführungsform gemäß der Erfindung vor, dass der zumindest eine Druckausgleichskanal als Schlitz oder dergleichen Öffnung der zuströmseitigen Radialwand ausgestaltet ist.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen Rückflußverhinderer mit Überdruckentlastung in einem Längsschnitt, wobei zwischen dem Einbaugehäuse des Rückflußverhinderers und einer Fluidleitung ein Dichtring abdichtet, der mit einem Rückstellelement einstückig verbunden ist,
- Fig. 2: den Rückflußverhinderer aus Figur 1 in einer Draufsicht auf seine Zuströmseite, und
- Fig. 3: einen mit Figur 1 und 2 vergleichbaren Rückflußverhinderer, bei dem jedoch der Dichtring und das auf ihn einwirkende Rückstellelement als separate Bauteile ausgestaltet sind.

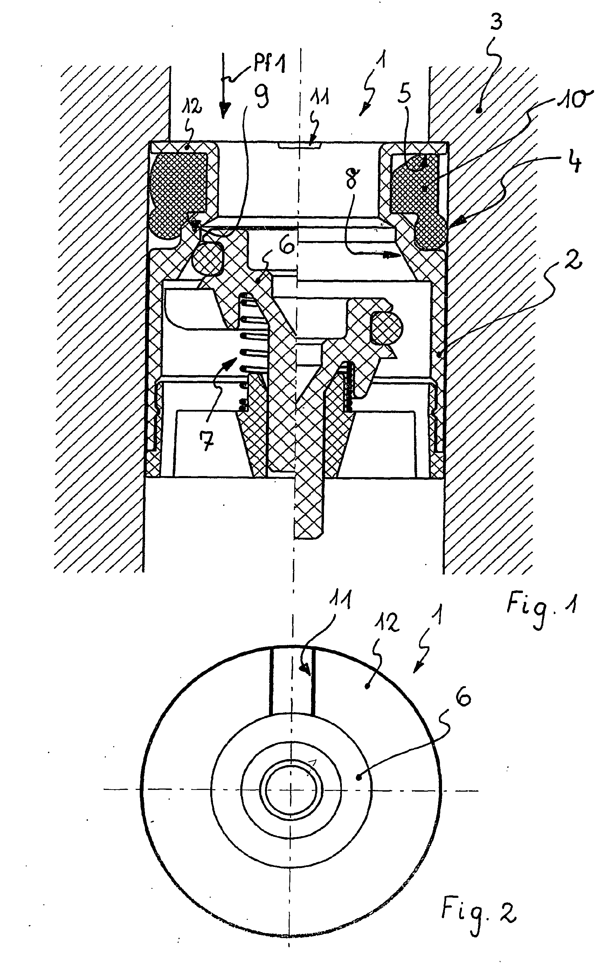

In Figur 1 ist die bevorzugte Ausführungsform eines Rückflußverhinderers 1 dargestellt, der mit seinem Einbaugehäuse 2 in die Gehäuse-Aufnahme einer Fluidleitung, beispielsweise einer Flüssigkeitsleitung 3, eingesetzt ist. Der Rückflußverhinderer 1 weist einen Dichtring 4 auf, der in einer am Gehäuse-Außenumfang des Einbaugehäuses 2 vorgesehenen Ringnut 5 gehalten ist und der zwischen Einbaugehäuse 2 und Flüssigkeitsleitung 3 abdichtet.

Der Rückflußverhinderer 1 weist einen Ventilkörper 6 auf. Dieser Ventilkörper 6 ist vom Flüssigkeitsdruck einer in Durchströmrichtung Pf1 fließenden Flüssigkeitsströmung gegen die Kraft einer Rückstellfeder 7 von der in Figur 1 links gezeigten Schließstellung in die in Figur 1 rechts dargestellte Offenstellung bewegbar. Demgegenüber wird der Ventilkörper 6 in seine Schließstellung bewegt und gegen den Ventilsitz 8 gepreßt, wenn ein Rückfluß entgegen der Zuströmrichtung Pf1 auf den Ventilkörper 6 einwirkt.

Wird ein solcher Rückflußverhinderer 1 beispielsweise im Bereich von Thermostatventilen eingesetzt, besteht die Gefahr, dass das Wasser, das beim Absperren der Kaltwasser- oder Warmwasserseite zwischen dem Rückflußverhinderer einerseits und dem ebenfalls geschlossenen Ventilsitz andererseits eingeschlossen ist, durch äußere Einflüsse derart stark aufgeheizt wird, bis erhebliche Überdrücke entstehen, die auf einen derartigen Rückflußverhinderer oder andere Teile der Fluidleitung schädigend einwirken können.

Der Dichtring 4 des hier dargestellten Rückflußverhinderers 1 ist daher zum Druckausgleich bei geschlossenem Rückflußverhinderer 1 und einem abströmseitig abgeschlossenen Fluidvolumen von einer Dichtstellung gegen die Rückstellkraft eines gummielastischen Rückstellelements 10 in eine Leckageposition bewegbar. Zu diesem Zweck ist in der Ringnut 5 ein vom Dichtring 4 umgriffener Ringführungsabschnitt 9 vorgesehen, der sich entgegen der Zuströmrichtung Pf1 des Rückflußverhinderers 1 verjüngt. Während der Dichtring 4 im abströmseitigen erweiterten Teilbereich des Ringführungsabschnittes 9 gegen den Innenumfang der Flüssigkeitsleitung 3 in seine Dichtstellung gedrückt wird, ist der Dichtring 4 in dem zuströmseitigen verjüngten Teilbereich in seiner demgegenüber entspannten Leckageposition gehalten.

In Figur 1 ist die Leckageposition des Dichtrings links von der Längsmittelachse und die Dichtstellung des Dichtringes 4 rechts von der Längsmittelachse dargestellt.

Der Dichtring 4 wird mittels eines auf ihn einwirkenden Rückflusses von der Dichtstellung in die Leckageposition bewegt, welcher Rückfluß von der Abströmseite des Rückflußverhinderers 1 zwischen der Gehäuse-Außenwand und dem Leitungs-Innenumfang zum Dichtring 4 fließt.

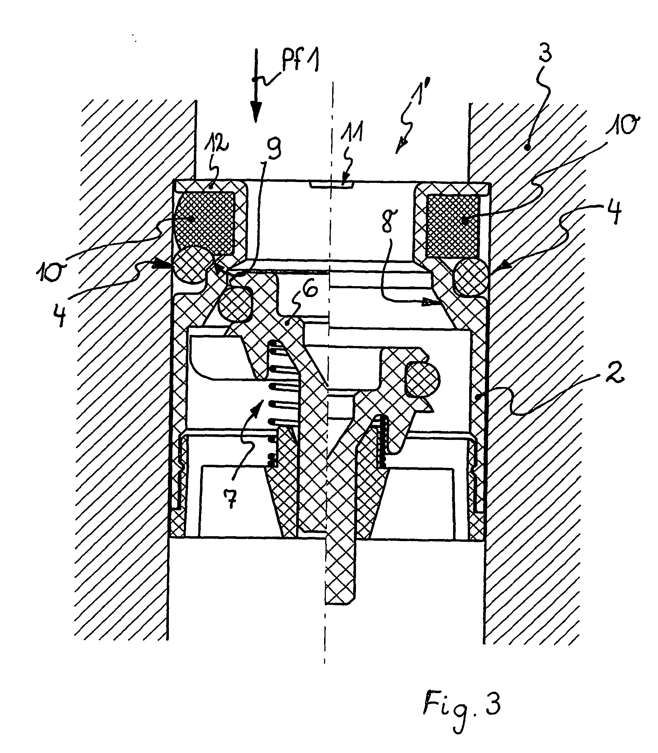

Wie das in Figur 3 dargestellte Ausführungsbeispiel eines Rückflußverhinderers 1' zeigt, können der Dichtring 4 und das ihm zugeordnete Rückstellelement 10 auch als separate Bauteile ausgestaltet sein. Bei dem in Figur 1 gezeigten Rückflußverhinderer 1 sind der Dichtring 4 und das Rückstellelement 10 jedoch demgegenüber zu einer Dicht- und Rückstelleinheit einstückig miteinander verbunden. Dabei können der Dichtring und das ebenfalls ringförmige Rückstellelement 10 auch als Mehrkomponenten-Spritzgußteil ausgestaltet sein. Während für den Dichtring 4 eine gut dichtende Materialkomponente gewählt wird, ist für das Rückstellelement 10 demgegenüber eine Materialkomponente mit hoher gummielastischer Federkraft vorzuziehen.

Um in der Leckageposition des Dichtringes 4 einen eventuellen Überdruck rasch abbauen zu können, ist ein Druckausgleichskanal 11 vorgesehen, der den in Zuströmrichtung Pf1 vor der Leckageposition angeordneten Nutbereich mit der Zuströmseite des Rückflußverhinderers 1 verbindet. Aus Figur 2 wird deutlich, dass der Druckausgleichskanal 11 des hier dargestellten Rückflußverhinderers 1 als Schlitz in der zuströmseitigen Radialwand 12 ausgestaltet ist.

Die hier dargestellten Rückflußverhinderer 1, 1' zeichnen sich durch seinen konstruktiv einfachen und vergleichsweise wartungsarmen Aufbau aus. Aufgrund der gleichbleibenden üblichen Einbaulänge dieser Rückflußverhinderer 1, 1' sind diese auch mit anderen zuströmseitig unmittelbar vorgeschalteten Einbauteilen kombinierbar. Die Rückflußverhinderer 1, 1' wirken einer übermäßigen Innendruckerhöhung wirkungsvoll entgegen, die andernfalls auch auf die Rückflußverhinderer 1, 1' schädigend einwirken könnte.

## Patentansprüche

1. Rückflußverhinderer (1, 1') mit einem, in eine Fluidleitung (3) einsetzbaren Einbaugehäuse (2), sowie mit zumindest einem Dichtring (4), der in einer, am Gehäuse-Außenumfang des Einbaugehäuses (2) vorgesehenen Ringnut (5) gehalten ist und der im montierten Zustand zwischen Einbaugehäuse (2) und Fluidleitung (3) abdichtet, **dadurch gekennzeichnet, dass** der Dichtring (4) zum Druckausgleich bei geschlossenem Rückflußverhinderer (1, 1') und einem abströmseitig abgeschlossenen Fluidvolumen von einer Dichtstellung gegen eine Rückstellkraft in eine Leckageposition bewegbar ist.

2. Rückflußverhinderer nach Anspruch 1, **dadurch gekennzeichnet, dass** auf den Dichtring (4) die Rückstellkraft zumindest eines gummielastischen Rückstellelementes (10) einwirkt.

3. Rückflußverhinderer nach Anspruch 2, **dadurch gekennzeichnet, dass** das zumindest eine Rückstellelement (10) ringförmig ausgestaltet ist.

4. Rückflußverhinderer nach Anspruch 2 oder 3, **dadurch gekennzeichnet, dass** der Dichtring (4) und das zumindest eine Rückstellelement (10) zu einer Dicht- und Rückstelleinheit einstückig miteinander verbunden sind.

5. Rückflußverhinderer nach einem der Ansprüche 1 bis 4, **dadurch gekennzeichnet, dass** in der Ringnut (5) ein vom Dichtring (4) umgriffener Ringführungsabschnitt (9) vorgesehen ist, der sich entgegen der Zuströmrichtung (Pf1) des Rückflußverhinderers (1, 1') verjüngt.

6. Rückflußverhinderer nach einem der Ansprüche 2 bis 4, **dadurch gekennzeichnet, dass** das Rückstellelement (10) sich an der zuströmseitigen Radialwand (12) der Ringnut (5) abstützt.

7. Rückflußverhinderer nach einem der Ansprüche 1 bis 6, **dadurch gekennzeichnet, dass** der Dichtring (4) mittels eines auf ihn einwirkenden Rückflusses von der Dichtstellung in die Leckageposition bewegbar ist.

8. Rückflußverhinderer nach einem der Ansprüche 1 bis 7, **dadurch gekennzeichnet, dass** zumindest ein Druckausgleichskanal (11) vorgesehen ist, der den in Zuströmrichtung (Pf1) vor der Leckageposition angeordneten Nutbereich mit der Zuströmseite des Rückflußverhinderers (1, 1') verbindet.

9. Rückflußverhinderer nach Anspruch 8, **dadurch gekennzeichnet, dass** der zumindest eine Druckausgleichskanal (11) als Schlitz oder dergleichen Öffnung der zuströmseitigen Radialwand (12) der Ringnut (5) ausgestaltet ist.

## Claims

1. Backflow preventer (1, 1') having a mounting housing (2) that can be inserted in a fluid conduit (3), and having at least one sealing ring (4) which is held in an annular groove (5) provided on the outer circumference of the mounting housing (2) and which forms a seal between the mounting housing (2) and the fluid conduit (3) in the installed position, **characterised in that**, when the backflow preventer (1, 1') is closed off and a fluid volume is shut off on the outflow side, the sealing ring is movable counter to a restoring force from a sealing position into a leakage position in order to equalise pressure.

2. Backflow preventer according to claim 1, **characterised in that** the restoring force of at least one rubber-elastic restoring element (10) acts on the sealing ring (4).

3. Backflow preventer according to claim 2, **characterised in that** the minimum of one restoring element (10) is of annular construction.

4. Backflow preventer according to claim 2 or 3, **characterised in that** the sealing ring (4) and the minimum of one restoring element (10) are integrally joined together to form a sealing and restoring unit.

5. Backflow preventer according to one of claims 1 to 4, **characterised in that** in the annular groove (5) is provided a ring guiding section (9) surrounded by the sealing ring (4) which tapers towards the inflow direction (Pf1) of the backflow preventer (1, 1').

6. Backflow preventer according to one of claims 2 to 4, **characterised in that** the restoring element (10) is supported on the radial wall (12) of the annular groove (5) on the inflow side.

7. Backflow preventer according to one of claims 1 to 6, **characterised in that** the sealing ring (4) is movable from the sealing position into the leakage position by means of a backflow acting upon it.

8. Backflow preventer according to one of claims 1 to 7, **characterised in that** at least one pressure equalising channel (11) is provided which connects the part of the groove arranged in front of the leakage position in the direction of inflow (Pf1) to the inflow end of the backflow preventer (1, 1').

9. Backflow preventer according to claim 8, **characterised in that** the minimum of one pressure equalising channel (11) is constructed as a slot or similar opening in the radial wall (12) of the annular groove (5) on the inflow side.

## Revendications

1. Dispositif anti-reflux (1, 1'), du type comportant un boîtier intégré (2) pouvant être inséré dans une conduite de fluide (3), ainsi qu'au moins une bague d'étanchéisation (4), qui est maintenue dans une rainure annulaire (5) prévue sur la périphérie extérieure du carter du boîtier intégré (2), et qui, à l'état monté, assure l'étanchéité entre le boîtier intégré (2) et la conduite de fluide (3), **caractérisé en ce que**, en vue d'assurer l'équilibrage des pressions à l'emplacement du dispositif anti-reflux (1, 1'), et le maintien d'un volume déterminé de fluide du côté aval, la bague d'étanchéisation (4) peut se déplacer à l'encontre d'une force de rappel, depuis une position étanche jusqu'à une position de fuite.

2. Dispositif anti-reflux selon la revendication 1, **caractérisé en ce que**, sur la bague d'étanchéisation (4), s'exerce la force de rappel d'au moins un élément de rappel en caoutchouc élastique.

3. Dispositif anti-reflux selon la revendication 2, **caractérisé en ce que** l'élément de rappel (10) a la forme d'une bague.

4. Dispositif selon l'une ou l'autre des revendications 2 ou 3, **caractérisé en ce que** la bague d'étanchéisation (4) et l'élément de rappel (10) sont réunis entre eux unitairement en une unité d'étanchéisation et de rappel.

5. Dispositif anti-reflux selon l'une quelconque des revendications 1 à 4, **caractérisé en ce que**, dans la rainure annulaire (5) est prévue une portion de guidage de bague (9), s'accrochant périphériquement sur la bague d'étanchéisation (4), et qui se rétrécit à l'inverse de la direction du flux (Pf1) dans le dispositif anti-reflux (1, 1').

6. Dispositif anti-reflux selon l'une quelconque des revendications 2 à 4, **caractérisé en ce que** l'élément de rappel (10) prend appui sur la paroi radiale du côté amont (12) de la rainure annulaire (5).

7. Dispositif selon l'une quelconque des revendications 1 à 6, **caractérisé en ce que** la bague d'étanchéisation (4) peut se déplacer depuis la position d'étanchéisation jusqu'à la position de fuite sous l'action d'un reflux agissant sur elle.

8. Dispositif anti-reflux selon l'une quelconque des revendications 1 à 7, **caractérisé en ce qu'**il est prévu au moins un canal d'équilibrage des pressions (11) qui relie la région de la rainure située en avant de la position de fuite dans la direction d'écoulement du flux (Pf1) avec le côté amont du dispositif anti-reflux (1, 1').

9. Dispositif anti-reflux selon la revendication 8, **caractérisé en ce que** le canal d'équilibrage de pression (11) est constitué par une fente ou une ouverture analogue pratiquée dans la paroi radiale du côté aval (12) de la rainure annulaire (5).
